# EUROPEAN PATENT APPLICATION

(11) **EP 4 722 731 A1**
(43) Date of publication of application: **08.04.2026**
(21) Application number: 24815001.3
(22) Date of filing: 15.04.2024
(51) Int. Cl.: G01N 35/04, B65F 1/00

(54) **AUTOMATIC ANALYSIS DEVICE**

(30) Priority: 26.05.2023 JP 2023086939
(71) Applicant: HITACHI HIGH-TECH CORPORATION, Tokyo 105-6409 (JP)
(72) Inventor: HANEISHI, Satoru, Tokyo 105-6409 (JP); TAKANO, Erii, Tokyo 105-6409 (JP); NAKANO, Hiroki, Tokyo 105-6409 (JP)
(74) Representative: MERH-IP Matias Erny Reichl Hoffmann Patentanwälte PartG mbB
(86) International application number: PCT/JP2024/014974
(87) International publication number: WO 2024/247514

(57) **Abstract**

An automatic analyzer that uses reaction between a sample and a reagent to analyze the sample, comprises: a storage part that includes a first part capable of transmitting light from outside, and a second part capable of transmitting light to outside, and that is capable of housing a plurality of consumables for use in the automatic analyzer; a light emitting part that is located outside the storage part and radiates first light into an inside of the storage part through the first part; a first light receiving part that is located outside the storage part and receives second light from inside the storage part through the second part; and a controller that judges that the storage part is in a full load condition if an amount of light received by the first light receiving part is larger than a previously determined threshold. Accordingly, it is possible to suppress erroneous detection caused by diffuse reflection of light and accurately detect a full load condition.

## Description

### Technical Field

This invention relates to an automatic analyzer.

### Background Art

An automatic analyzer reacts blood, urine, or other biological specimens (samples) with an analytical reagent that reacts specifically with a component under measurement in the specimen in a reaction container or the like, and then quantitatively detects a compound produced by this reaction, thereby automatically performing a process from measuring the component under measurement to outputting a result. Examples of automatic analyzers include a biochemical analyzer and an immunological analyzer. In such an automatic analyzer, when a container such as the reaction container, which is one of consumables, is used up in an analysis section, it is put into a storage part provided at a determined position for disposal.

On the other hand, a technique for detecting a storage status in the storage part for an empty container such as PET bottles is known, for example, as described in Patent Literature **1.** Patent Literature 1 discloses an empty container collection device that stores an empty container such as a PET bottle which is put from the inlet, in a collection box provided inside the device and includes a detection unit that detects the empty containers in the collection box. In the empty container collection device, a plurality of optical detection units that detect the empty containers collected in the collection box are provided above the collection box, and optical axes of the plurality of optical detection units are located so that their respective optical axes intersect in a plane of a maximum storage position in the collection box.

### Citation List

### Patent Literature

Patent Literature: Japanese Unexamined Patent Application Publication No. 2013-91546

### Summary of Invention

### Technical Problem

In the above conventional technology, a distance sensor of a triangulation method and a distance sensor of a time-of-flight method and the like are used to detect whether the storage part is in a full load condition of used containers. In the distance sensor of the triangulation method, a distance to an object under measurement is measured such that a measurement light is emitted with a light-emitting element such as an LED or laser diode as a light source, a reflected measurement light reflected by the object under measurement is received by a light-receiving element such as a PSD or CMOS paired with the light source, and an image position on the light-receiving element which changes with changes in a distance position of the object under measurement is analyzed. In the distance sensor of the time-of-flight method, a short time between when the measurement light is emitted and when the measurement light is received is measured, and the time difference in the measurement is converted into a distance.

However, small containers such as reaction containers used in automatic analyzers cause diffuse reflection of a measurement light on their surfaces, which raises concerns that distance sensors using the triangulation method or the time-of-flight method may cause an erroneous detection of a distance, and cannot accurately detect the full load condition of the storage part.

The present invention has been made in view of the above, and has an aim to provide an automatic analyzer that can suppress an erroneous detection due to diffuse reflection of light and accurately detect the full load condition.

### Solution to Problem

This application includes plural means for solving the above problems, and one example is an automatic analyzer that uses reaction between a sample and a reagent to analyze the sample, and the automatic analyzer includes: a storage part that includes: a first part capable of transmitting light from outside; and a second part capable of transmitting light to outside, and that is capable of housing a plurality of consumables for use in the automatic analyzer; a light emitting part that is located outside the storage part and radiates first light into an inside of the storage part through the first part; a first light receiving part that is located outside the storage part and receives second light from inside the storage part through the second part; and a controller that judges that the storage part is in a full load condition if an amount of light received by the first light receiving part is larger than a previously determined threshold.

### Advantageous Effects of Invention

It is possible to suppress erroneous detection caused by diffuse reflection of light and accurately detect a full load condition.

### Brief Description of Drawings

[Fig. 1] Fig. 1 is a diagram that schematically shows the general configuration of an automatic analyzer.
[Fig. 2] Fig. 2 is a perspective view that shows the wastage storage part of a waste disposal section along with related elements.
[Fig. 3] Fig. 3 is a longitudinal sectional view that shows the wastage storage part fixed in the waste disposal section along with related elements as seen from the front side of the automatic analyzer.
[Fig. 4] Fig. 4 is a longitudinal sectional view that shows the wastage storage part fixed in the waste disposal section along with related elements as seen from the right side of the automatic analyzer.
[Fig. 5] Fig. 5 is a longitudinal sectional view that shows the wastage storage part fixed in the waste disposal section along with related elements and also shows a case that the wastage storage part is in a full load condition.
[Fig. 6] Fig. 6 is a graph that shows the relation between the amount of accumulated wastage in the wastage storage part and the amount of received light in the light receiving part.
[Fig. 7] Fig. 7 is a longitudinal sectional view that shows the wastage storage part fixed in the waste disposal section along with related elements as seen from the front side of the automatic analyzer.

### Description of Embodiments

Hereinafter, embodiments of the present invention will be described with reference to the drawings. In the following, a case where an analysis section is equipped as the automatic analyzer will be described as an example, but it is not limited to this case, the present invention can be applied to, for example, an automatic analyzer that includes one or more detection sections for biochemical systems, immune systems, or other analysis items in addition to the analysis section, or instead of the analysis section. Similarly, in the present invention, the automatic analyzer is not limited to an automatic analyzer of single analysis module configuration. For example, the present invention is applied to an automatic analyzer which has a configuration in which two or more analysis modules that can measure a variety of identical or different analysis items, or two or more preprocessing modules that perform preprocessing are connected by a transport device.

### First Embodiment

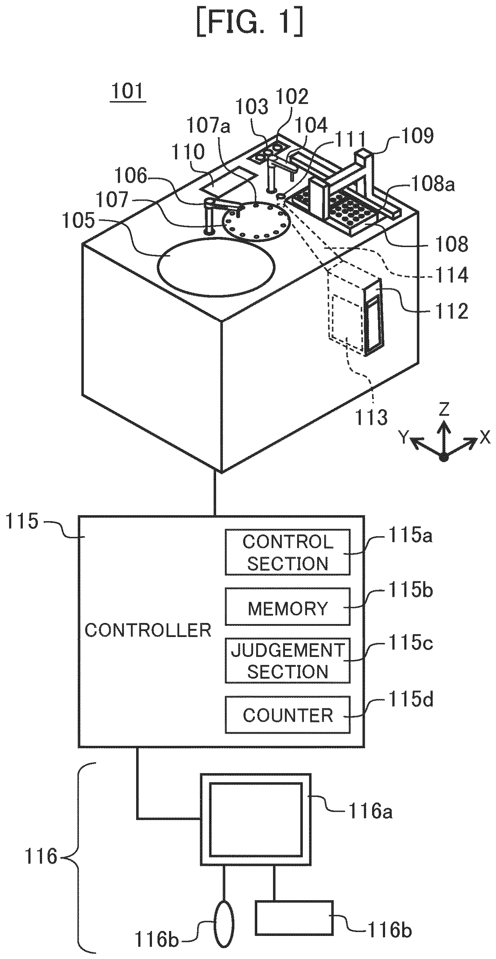

First embodiment of the invention will be described with reference to Figs. 1 to 6.

Fig. 1 is a diagram that schematically shows the general configuration of an automatic analyzer. In the following description, when the automatic analyzer 101 is viewed from the front, a coordinate system will be set up with an X-axis extending from left to right, a Y-axis extending rearward, and a Z-axis extending upward.

In FIG. 1, the automatic analyzer 101 is schematically configured of a sample transport mechanism 102, a sample dispensing mechanism 104, a reagent storage 105, a reagent dispensing mechanism 106, an incubator 107, an unused reaction container storage 108, a container transport section 109, an analysis section 110, a waste disposal section 112, a wastage transport section 114, a controller 115, and an operation section 116.

In a state in which a sample under analysis (blood, urine, or other biological specimen) is stored in a sample container 103, the sample under analysis is transported within the automatic analyzer 101 by the sample transport mechanism 102 such as a belt conveyor or rack handler, and is transported to a position (sample dispensing position) where the sample is dispensed by the sample dispensing mechanism 104 including a dispensing pipette for dispensing the sample.

A plurality of consumable reaction container 108a are placed in the unused reaction container storage 108, and are supplied into the automatic analyzer 101 by the container transport section 109. For example, the reaction container 108a is comprised of a transparent material and has a shape similar to that of a test tube with a rounded bottom. The reaction container 108a placed on the unused reaction container storage 108 are grasped one by one by the container transport section 109, and then transported to a sample discharge position by movements such as lifting, lowering, and horizontal movement.

The container transport section 109 is configured to be movable in the X-axis, Y-axis, and Z-axis directions so as to enable to move the reaction container 108a to the sample discharge position or the like. In addition, in the container transport section 109, a transport range for the reaction container 108a includes not only the sample discharge position but also the container placement position (a reaction container holder 107a on the incubator 107), an analysis position (the analysis section 110), and a container disposal position (a reaction container discard hole 111: described below), and the container transport section 109 is configured to be rotatable in order to transport the reaction container 108a to these positions.

The sample dispensing mechanism 104 moves to an upper area of the sample, aspirates the sample, and then moves to an upper area of the reaction container 108a that has been transported to the sample discharge position by the container transport section 109, and discharges the sample into the reaction container 108a. Thereafter, the sample dispensing mechanism 104 cleans a nozzle of the dispensing pipette using a cleaning mechanism (omitted for simplicity of illustration). When a replaceable tip is used instead of the nozzle, the tip may be configured to be replaced by a tip replacement mechanism.

The incubator 107 is formed in a disk shape that is rotatably supported around a vertical central axis, and has a plurality of reaction container holders 107a on a circumference near the outer periphery, for engaging the reaction containers 108a. The incubator 107 can rotate around the central axis thereof to move each reaction container 108a engaged with the reaction container holder 107a to a predetermined position such as a reagent discharge position.

The reagent storage 105 has a cylindrical housing with hollow interior that is rotatably supported around a vertical central axis, and a plurality of reagent containers (omitted for simplicity of illustration) are held radially along an inner wall of the housing, to thereby form a reagent holding section.

The reagent dispensing mechanism 106 is configured to aspirate a reagent in the reagent container and move the reagent to a predetermined position. The reagent dispensing mechanism 106 moves to an upper area of a predetermined type of reagent that has been moved to the reagent dispensing position on the reagent storage 105, aspirates a predetermined amount of reagent using a dispensing pipette, moves to the upper area of the reaction container 108a in the incubator 107, and discharges the reagent into the reaction container 108a that has been moved to the reagent discharge position by the incubator 107.

The reaction container 108a in which the sample and the predetermined reagent have been dispensed and a predetermined reaction time has elapsed to produce a reaction solution is moved to the analysis section 110 by the container transport section 109. The analysis section 110 performs an analysis process to detect a concentration of an object under detection and the like in the reaction solution.

The waste disposal section 112 is configured for disposal of the used reaction containers 108a, and stores the reaction containers 108a and the like transported through the wastage transport section 114 from the reaction container discard hole 111 provided at a container location position on the automatic analyzer 101 into a wastage storage part 113. The used reaction container 108a, which holds the reaction solution after completion of the analysis process, is moved to an upper area of the reaction container discard hole 111 by the container transport section 109, put into the reaction container discard hole 111, and then discarded in the wastage storage part 113 through the wastage transport section 114.

Here, a configuration of the sample transport mechanism 102, the sample dispensing mechanism 104, the reagent storage 105, the reagent dispensing mechanism 106, the incubator 107, the unused reaction container storage 108, the container transport section 109, the analysis section 110, the waste disposal section 112, and the wastage transport section 114, which are included in the automatic analyzer 101, is referred to as an analysis operation section.

The controller 115 controls an overall operation of the automatic analyzer 101 including each of devices in the analysis operation section, and includes the operation section 116 for inputting various settings and operation instructions. The controller 115 is configured of, for example, a hardware board and a computer, and includes a control section 115a, a memory 115b such as a hard disk, a judgement section 115c, a counter 115d, and the like.

The control section 115a may be configured as hardware using a dedicated circuit board, or may be configured by software executed by a computer. When configured by the hardware, the control section 115a can be realized by integrating a plurality of arithmetic units that execute processing on a wiring board, or integrating in a semiconductor chip or in a package. When configured by the software, the control section 115a can be realized by installing a high-speed general-purpose CPU in the computer and executing a program that executes a desired arithmetic processing. It is also possible to upgrade an existing device using a recording medium on which this program is recorded. These devices, circuits, and computers are connected to each other through a wired or wireless network, and data is transmitted and received as needed.

The memory 115b stores, for example, control parameters corresponding to each unit and sample information relating to various samples.

The judgement section 115c performs, for example, a judgement process by comparing detection signals from various sensors with control parameters stored in the memory 115b to judge a magnitude relation, and outputs an alert signal if it is judged that specified conditions are met. Specifically, a waste fullness detection process (described in detail later) is performed which detects that the wastage storage part 113 of the waste disposal section 112 is in a full load condition with the used reaction containers 108a and notifies an operator.

The counter 115d performs a counting process in which the counter 115d counts the number of reaction containers 108a (the number of discards) discarded into the reaction container discard hole 111, for example, from upper part of such as a control operation of the automatic analyzer 101, and information on the number (or information indicating that the count has been increased) is transmitted to the memory 115b.

The operation section 116 is comprised of a display section 116a such as a display, and an input section 116b such as a mouse and a keyboard. The display section 116a displays various information such as settings stored in the memory 115b, input screens for the settings, sample information, analysis results, and alerts. The operation section 116 may be a device such as a touch panel having a display function and an input function.

Next, the waste fullness detection process in the waste disposal section 112 of the automatic analyzer 101 will be described.

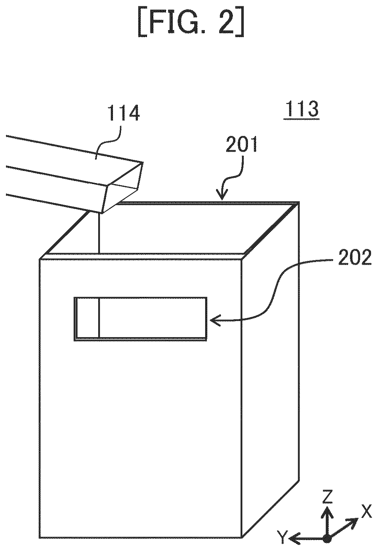

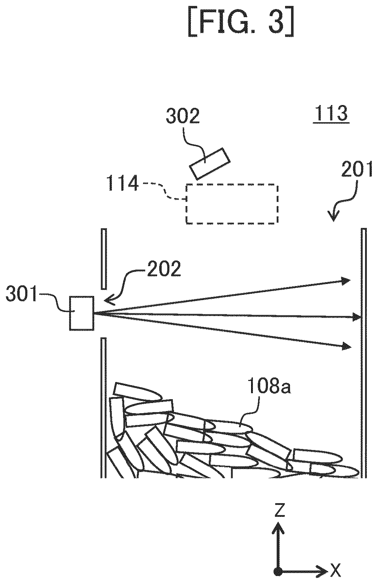

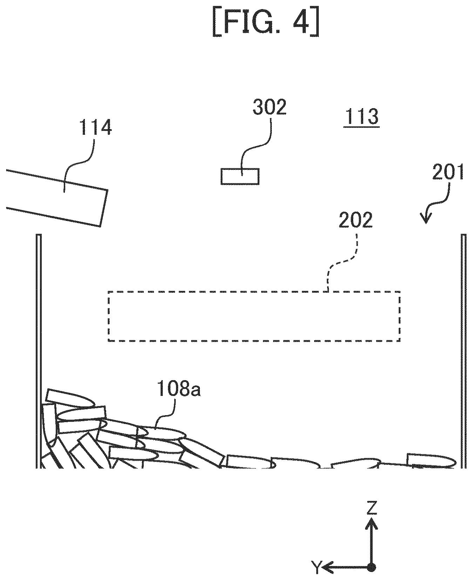

Fig. 2 is a perspective view that shows the wastage storage part of a waste disposal section along with related elements. Figs. 3 and 4 are longitudinal sectional views that show the wastage storage part fixed in the waste disposal section along with related elements, with Fig. 3 showing the automatic analyzer as seen from the front side and Fig. 4 showing the same as seen from the right side.

As shown in Fig. 2, the wastage storage part 113 has a rectangular parallelepiped shape that is configured to cover the sides and below with planar members that align with any of the X-, Y-, or Z-axis, and the wastage storage part 113 has an opening 201 provided on the top surface so as to correspond to the outlet of the wastage transport section 114, and an opening 202 provided on the side surface. The wastage storage part 113 is a storage part capable of housing the plurality of consumables such as the reaction containers 108a used in the automatic analyzer 101.

The opening 201 has a function as an inlet for putting waste such as the used reaction containers 108a transported through the wastage transport section 114 into the wastage storage part 113, and a function as a light-transmitting section (a second part) capable of transmitting light to an outside. The wastage transport section 114 is located above the opening 201 so that the transported reaction container 108a falls into a previously determined position (for example, near the center of the bottom) within the wastage storage part 113.

The opening 202 has a function as a handle for facilitating handling of the wastage storage part 113, and a function as a light-transmitting section (a first part) capable of transmitting light from outside. In First Embodiment, a description is made by illustrating a case where the opening 202 is provided, but for example, a recess may be formed of a transparent material so as to function as a handle and a light-transmitting section, or an observation window may be formed of the transparent material so as to function as at least the light-transmitting section. The wastage storage part 113 is fixed by a wastage storage part holder (omitted for simplicity of illustration).

The wastage storage part 113 is configured so that a ratio of depth (Y-axis direction): width (X-axis direction): height (Z-axis direction) when viewed from a front of the automatic analyzer 101 is, for example, approximately 3:2:4. A ratio of the width of the opening 202 to the width of the wastage storage part 113 in the depth direction (Y-axis direction) is, for example, approximately 3:5, and a ratio of the width of the opening 202 in the height direction (X-axis direction) to the width of the wastage storage part 113 in the depth direction (Y-axis direction) is, for example, approximately 1:11.

The waste disposal section 112 includes: a light emitting part 301 that is located to be opposite to the lateral opening 202 on outside of the wastage storage part 113 and that irradiates light (a first light) into an inside of the wastage storage part 113 (storage part) through the opening 202 (the first part); and a light receiving part 302 (a first light receiving part) that is located to be opposite to the upper opening 201 on outside of the wastage storage part 113 and that receives light (a second light) from the inside of the wastage storage part 113 (storage part) through the opening 201 (the second part).

The light emitting part 301 irradiates the inside of the wastage storage part 113 with diffused light, and is, for example, a light emitting diode. A wavelength of the light radiated from the light emitting part 301 is not limited to a visible light band, but may be an invisible light band such as infrared or ultraviolet light. However, if laser light or the like, which has high directivity and convergence, is used as the light radiated from the light emitting part 301, diffuse reflection may occur and appropriate reflected light may not be obtained, so a light source that radiates diffused light, such as a light-emitting diode or a light bulb, is preferable. The light emitting part 301 may be installed toward a direction that illuminates the inside of the wastage storage part 113 from outside of the wastage storage part 113 through the opening 202, and with respect to the X- and Y-axes, installation angles may be at previously determined angles, respectively. A light emitting operation of the light emitting part 301 can be performed, for example, each time the number of counts of the counter 115d increases, thereby to prevent deterioration of the light emitting part 301.

The light receiving part 302 receives and detects light emitted from the inside of the wastage storage part 113 to outside through the opening 201, and is, for example, an optical sensor comprised of a semiconductor element and the like. The light receiving part 302 converts the received light into a voltage signal having a magnitude corresponding to the amount of received light using a photodetector and circuit elements, and transmits the voltage signal to the controller 115. The light receiving part 302 is installed above the opening 201 at a position that does not interfere with transporting of waste to the wastage storage part 113 by the wastage transport section 114, that is, the light receiving part 302 is installed at a position higher than the wastage transport section 114. The light receiving part 302 may be installed facing a direction that makes it easy for a light exiting from inside the wastage storage part 113 through the opening 201 to enter, for example, may be installed facing a position where waste such as the used reaction containers 108a put through the wastage transport section 114 is likely to pile up at the inside of the wastage storage part 113.

The light emitting part 301 and the light receiving part 302 are located so that an optical axis of the light (the first light) radiated from the light emitting part 301 and an optical axis of the light received by the light receiving part 302 (in Fig. 4, an optical axis of the light (the second light) scattered by waste) face in different directions. This can prevent the light radiated from the light emitting part 301 from being directly received by the light receiving part 302.

As shown in Figs. 3 and 4, when an amount of wastage (reaction container 108a) in the wastage storage part 113 is less than a predetermined amount (hereinafter, referred to as an unfilled load condition), among light radiated from the light emitting part 301, a portion of the light reflected from an inner surface of the wastage storage part 113 enters the light receiving part 302.

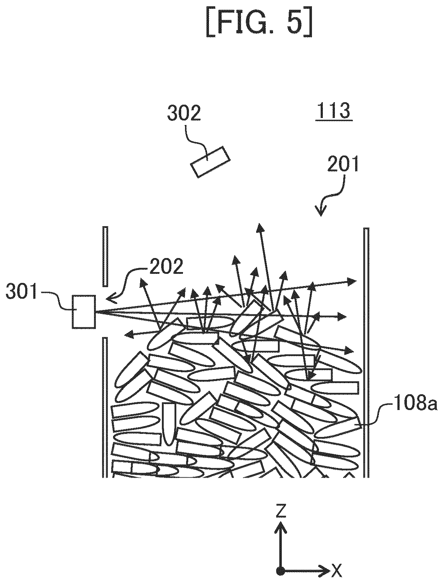

On the other hand, as shown in Fig. 5, when the wastage (reaction container 108a) has accumulated in the wastage storage part 113 and is in a state where wastage exceeds a predetermined amount (hereinafter, referred to as a full load condition), light reflected from surface layers of the reaction containers 108a accumulated inside the wastage storage part 113 and a portion of light, that passes through the surface layers of the accumulated reaction containers 108a and is reflected by the deeper reaction containers 108a, enter the light receiving part 302, in addition to the light that has entered the light receiving part 302 when the wastage was in an unfilled load condition, .

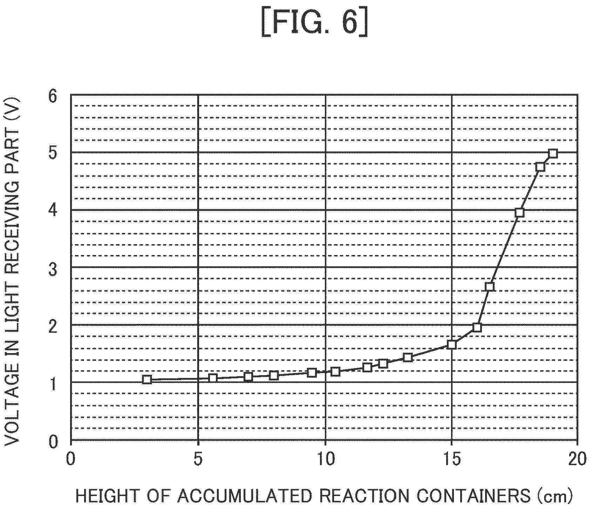

Fig. 6 is a graph that shows the relation between an amount (accumulation height) of accumulated wastage (reaction container) in the wastage storage part and an amount of received light (voltage signal) in the light receiving part.

As shown in Fig. 6, when the wastage storage part 113 is in an unfilled load condition, only a portion of reflected light from the inner surface of the wastage storage part 113 enters the light receiving part 302, therefore the amount of received light (voltage signal) at the light receiving part 302 takes a relatively low value. As a height of the reaction containers 108a accumulated in the wastage storage part 113 increases and approaches the full load condition, the amount of light reflected from the surface of the reaction containers 108a increases, and the amount of light entered the light receiving part 302 increases, resulting in a higher voltage signal being observed. That is, an accumulation degree of the reaction containers 108a in the wastage storage part 113 can be quantitatively judged from the voltage signal that increases according to the amount of light received by the light receiving part 302, therefore by experimentally obtaining the value of the voltage signal when the wastage storage part 113 becomes the full load condition with the reaction containers 108a, setting the value as a threshold value (a threshold voltage), and comparing the voltage signal with the threshold value, it can be judged whether the wastage storage part 113 is in the full load condition.

The judgement section 115c of the controller 115 compares the voltage signal obtained by the light receiving part 302 with a previously determined threshold voltage stored in the memory 115b, and when the voltage signal from the light receiving part 302 is greater than the threshold voltage, that is, when the accumulated amount of the reaction containers 108a in the wastage storage part 113 exceeds a predetermined amount, it judges that the wastage storage part 113 has reached the full load condition. When the judgement section 115c judges that the wastage storage part 113 is in the full load condition, the judgement section 115c displays a warning on the display section 116a to prompt a replacement of the wastage storage part 113, and stops functions of the analysis section 110 and others as necessary.

The judgement section 115c may use not only the voltage signal from the light receiving part 302 but also the number of discards of the reaction containers 108a (wastage) counted by the counter 115d as a factor for judging whether the wastage storage part 113 is in the full load condition. Specifically, when the voltage signal exceeds the threshold voltage and the number of discards of the reaction containers 108a obtained by a counting process exceeds the previously determined threshold (a quantity threshold), it is judged that the wastage storage part 113 is in the full load condition.

Effects of First Embodiment configured as above will be described.

A distance sensor of a triangulation method measures a distance to an object under measurement such that a measurement light is emitted with a light-emitting element such as an LED or laser diode as a light source, a reflected measurement light reflected by the object under measurement is received by a light-receiving element such as a PSD or CMOS paired with the light source, and an image position on the light-receiving element which changes with changes in a distance position of the object under measurement is analyzed. A distance sensor of a time-of-flight method is configured such that a short time between when the measurement light is emitted and when the measurement light is received is measured, and the time difference in the measurement is converted into a distance. When the distance sensor of the triangulation method and the distance sensor of the time-of-flight method are used to detect that the storage part is in a full load condition of the used containers, small containers such as reaction containers used in the automatic analyzers cause diffuse reflection of the measurement light on their surfaces. Therefore, when the distance sensor of the triangulation method and the distance sensor of the time-of-flight method are used, a concern about an erroneous detection of distance is considered. Accordingly, it is impossible to accurately detect that the storage part is in the full load condition.

In contrast, in First Embodiment, the automatic analyzer 101 that uses reaction between a sample and a reagent to analyze the sample includes: the storage part (for example, the wastage storage part 113) that has the first part (for example, the opening 202) capable of transmitting light from outside and the second part (for example, the opening 201) capable of transmitting light to outside, and that is capable of housing the plurality of consumables (for example, the reaction container 108a) for use in the automatic analyzer 101; the light emitting part 301 that is located outside the storage part and radiates first light into an inside of the storage part through the first part; the first light receiving part (for example, the light receiving part 302) that is located outside the storage part and receives second light from inside the storage part through the second part; and the controller 115 that judges that the storage part is in the full load condition if an amount of light received by the first light receiving part is larger than a predetermined threshold, therefore, it is possible to suppress erroneous detection caused by diffuse reflection of light and accurately detect the full load condition.

### Second Embodiment

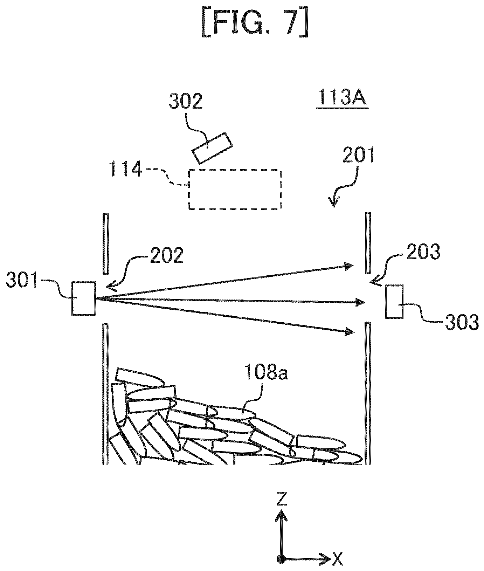

Second embodiment of the present invention will be described with reference to Fig. 7.

Second Embodiment shows a case where a light receiving part for directly measuring an amount of light emitted from a light emitting part is further provided. In Second Embodiment, the same components as those in First Embodiment are denoted by the same reference signs, and the description thereof will be omitted as appropriate.

Fig. 7 is a longitudinal sectional view that shows a wastage storage part fixed in a waste disposal section along with related elements as seen from the front side of an automatic analyzer.

As shown in Fig. 7, a wastage storage part 113A has a rectangular parallelepiped shape configured so as to cover sides and lower part with planar members that align with any of the X-, Y-, or Z-axis, and has an opening 201 provided on a top surface that corresponds to an outlet of a wastage transport section 114, and openings 202 and 203 provided at positions opposite to each other on side surfaces.

The opening 201 has a function as an inlet for putting waste such as used reaction containers 108a transported through the wastage transport section 114 into the wastage storage part 113A, and a function as a light-transmitting section (a second part) capable of transmitting light to outside. The wastage transport section 114 is located above the opening 201 so that the transported reaction container 108a falls into a previously determined position (for example, near the center of the bottom) within the wastage storage part 113A.

The opening 202 has a function as a handle for facilitating handling of the wastage storage part 113A, and a function as a light-transmitting section (a first part) capable of transmitting light from outside. The opening 203 has a function as a handle for facilitating handling of the wastage storage part 113A, and a function as a light-transmitting section (a third part) capable of transmitting light to outside. In Second Embodiment, a case where the openings 202 and 203 are provided is described as an example, but for example, recesses may be formed from a transparent material to function as handles and light-transmitting sections, or observation windows may be formed from the transparent material to function as at least the light-transmitting section.

A waste disposal section 112 includes: a light emitting part 301 that is located to be opposite to the lateral opening 202 outside the wastage storage part 113A and that radiates light (a first light) into an inside of the wastage storage part 113A (storage part) through the opening 202 (the first part); a light receiving part 302 (a first light receiving part) that is located to be opposite to the upper opening 201 outside the wastage storage part 113A and that receives light (a second light) from inside of the wastage storage part 113A (storage part) through the opening 201 (the second part); and the light receiving part 302 (a second light receiving part) that is located to be opposite to a lateral opening 203 outside the wastage storage part 113A and that receives light (the first light from the light emitting part 301) from an inside of the wastage storage part 113A (a storage part) through the opening 203 (the third part).

The light receiving part 303 receives and detects light emitted from the inside of the wastage storage part 113A to an outside through the opening 203, and is, for example, an optical sensor comprised of a semiconductor element and the like. The light receiving part 303 converts the received light into a voltage signal having a magnitude corresponding to an amount of the received light using a photodetector and circuit elements, and transmits the voltage signal to the controller 115. The light receiving part 303 may be installed toward the direction of the light emitting part 301 so that the light (the first light) from the light emitting part 301 can easily enter the light receiving part 303 through the opening 203 from inside the wastage storage part 113A.

A judgement section 115c of the controller 115 compares a voltage signal obtained by the light receiving part 302 with a previously determined threshold voltage stored in the memory 115b, and when the voltage signal from the light receiving part 302 is greater than the threshold voltage, that is, when the accumulated amount of the reaction containers 108a in the wastage storage part 113A exceeds the previously determined amount, it judges that the wastage storage part 113 has reached the full load condition. When the judgement section 115c judges that the wastage storage part 113 is in the full load condition, the judgement section 115c displays a warning on the display section 116a to prompt a replacement of the wastage storage part 113, and stops functions of the analysis section 110 and others as necessary.

In addition, the judgement section 115c compares a voltage signal obtained by the light receiving part 303 with a threshold voltage related to deterioration (a deterioration threshold voltage) that is predetermined and stored in the memory 115b, and when the voltage signal from the light receiving part 303 is smaller than the deterioration threshold voltage, that is, when a measured value of an amount of light in the light emitting part 301 becomes smaller than a specified value, it judges that a light emitting element of the light emitting part 301 has deteriorated. When the judgement section 115c judges that the light emitting element of the light emitting part 301 has deteriorated, the judgement section 115c displays a warning on the display section 116a to prompt a maintenance of the light emitting part 301, and stops the functions of the analysis section 110 and the like as necessary.

The judgement section 115c may use not only the voltage signal from the light receiving part 302 but also the voltage signal from the light receiving part 303 as a factor for judging whether the wastage storage part 113 is in the full load condition. Specifically, when the voltage signals from both the light receiving parts 302 and 303 exceed the threshold voltages respectively, it is judged that the wastage storage part 113 is in the full load condition.

The other configurations are identical to those of First Embodiment.

Second Embodiment configured as above can also achieve identical effects to First Embodiment.

Furthermore, since deterioration of the light emitting part 301 can be detected, the full load condition can be detected more accurately.

### Additional Statement

The present invention is not limited to the above embodiments, and includes various modifications and combinations without departing from the scope of the present invention. The present invention is not limited to an embodiment having all of the configurations described in the above embodiments, and includes an embodiment in which some of the configurations are omitted. The above configurations, functions, and the like may be realized, in part or in whole, by designing them as an integrated circuit, for example. The above configurations, functions, and the like may be realized by software such that a processor interprets and executes programs that realize respective functions.

### List of Reference Signs

101: automatic analyzer,
102: sample transport mechanism,
103: sample container,
104: sample dispensing mechanism,
105: reagent storage,
106: reagent dispensing mechanism,
107: incubator,
107a: reaction container holder,
108: unused reaction container storage,
108a: reaction container,
109: container transport section,
110: analysis section,
111: reaction container discard hole,
112: waste disposal section,
113, 113A: wastage storage part,
114: wastage transport section,
115: controller,
115a: control section,
115b: memory,
115c: judgement section,
115d: counter,
116: operation section,
116a: display section,
116b: input section,
201, 202, 203; opening,
301: light emitting part,
302, 303: light receiving part

## Claims

1. An automatic analyzer that uses reaction between a sample and a reagent to analyze the sample, comprising:
a storage part that includes: a first part capable of transmitting light from outside; and a second part capable of transmitting light to outside, and that is capable of housing a plurality of consumables for use in the automatic analyzer;
a light emitting part that is located outside the storage part and radiates first light into an inside of the storage part through the first part;
a first light receiving part that is located outside the storage part and receives second light from inside the storage part through the second part; and
a controller that judges that the storage part is in a full load condition if an amount of light received by the first light receiving part is larger than a previously determined threshold.

2. The automatic analyzer according to Claim 1, wherein an optical axis of the first light and an optical axis of the second light are oriented in different directions.

3. The automatic analyzer according to Claim 1, wherein
the first part is located laterally to the storage part, and
the second part is located above the storage part.

4. The automatic analyzer according to Claim 1, wherein
the light emitting part is located laterally to the storage part, and
the first light receiving part is located above the storage part.

5. The automatic analyzer according to Claim 1, wherein the second part is located in a position so as not to interfere with transportation of the consumables to the storage part by a transport section.

6. The automatic analyzer according to Claim 1, further comprising:
a counter that counts a quantity of the consumables housed in the storage part, wherein
the controller gives an operator of the automatic analyzer a warning that the storage part is in a full load condition when the quantity of the consumables counted by the counter reaches a previously determined quantity threshold.

7. The automatic analyzer according to Claim 1, further comprising:
a counter that counts a quantity of the consumables housed in the storage part, wherein
the controller judges that the storage part is in a full load condition when the quantity of the consumables counted by the counter reaches a previously determined quantity threshold or when the amount of light received by the first light receiving part is larger than a previously determined threshold.

8. The automatic analyzer according to Claim 1, wherein,
the storage part further includes a third part that is located in a position to face the first part and can transmit light to outside,
the storage part further includes a second light receiving part that is located outside the storage part in a position to face the light emitting part and transmits the first light from inside the storage part through the third part, and
the controller judges whether or not the amount of the first light radiated from the light emitting part is a previously determined amount of light, in accordance with an amount of light received by the second light receiving part.
